# EUROPÄISCHE PATENTSCHRIFT

(11) **EP 3 963 303 B1**
(45) Veröffentlichungstag und Bekanntmachung des Hinweises auf die Patenterteilung: **08.05.2024**
(21) Anmeldenummer: 20712235.9
(22) Anmeldetag: 10.03.2020
(51) Int. Cl.: G01M 13/023, F16G 1/06

(54) **VERFAHREN ZUR ÜBERWACHUNG EINES RIEMENTRIEBS**
METHOD FOR MONITORING A BELT DRIVE
PROCÉDÉ DE SURVEILLANCE D'UN ENTRAÎNEMENT PAR COURROIE

(30) Priorität: 30.04.2019 DE 102019206169
(43) Veröffentlichungstag der Anmeldung: 09.03.2022
(73) Patentinhaber: ContiTech Deutschland GmbH, 30175 Hannover (DE)
(72) Erfinder: FISS, Tim, 30419 Hannover (DE); FREIHEIT, Philipp, 30419 Hannover (DE); HINZ, Arne, 30419 Hannover (DE); ROSENBOHM, Svenja, 30419 Hannover (DE)
(74) Vertreter: Continental Corporation
(86) Internationale Anmeldenummer: PCT/EP2020/056286
(87) Internationale Veröffentlichungsnummer: WO 2020/221496

(56) Entgegenhaltungen:
- EP-A2- 0 382 115
- DE-A1-102015 208 679
- US-A1- 2008 006 097
- US-B1- 9 228 909

## Beschreibung

Die Erfindung betrifft ein Verfahren zur Überwachung eines Riementriebs mit mindestens einer durch einen Antriebsmotor angetriebenen Antriebsscheibe, einer Abtriebsscheibe und mindestens einem kraftübertragenden als Zugriemen ausgebildeten endlosen Antriebsriemen, der Antriebs- und Abtriebsscheibe umlaufend über jeweils einen Teilumfang umschlingt, wobei der Riemen mindestens eine erste Markierung aufweist und mindestens ein dem Riemen zugeordnetes erstes Sensorelement vorgesehen ist, wobei während des Riemenumlaufs die Passage (bzw. das Vorbeilaufen) der ersten Markierung durch das erste Sensorelement detektiert wird und das erste Sensorelement vorzugsweise elektronische Einrichtungen zur Ausgabe eines von der Detektion der ersten Markierung abhängigen Signals S_{R} aufweist. Ebenfalls ist eine besondere Verwendung des Verfahrens offenbart sowie ein auf das Verfahren angepasster Riementrieb, insbesondere ein Riementrieb in einem Lenkungsgetriebe eines Kraftfahrzeugs.

Riementriebe zur Übertragung von Drehmomenten und Drehbewegungen sind auf vielen technischen Gebieten bekannt und gelten als leicht bauende, geräuscharme und hohe Drehmomente übertragende Antriebssysteme. Dabei umschlingt der Antriebsriemen über einen Teilumfang bzw. über einen Umschlingungswinkel jeweils eine Antriebsscheibe oder -rolle und eine Abtriebsscheibe oder -rolle und überträgt dort die Kräfte durch Reibung und/oder durch Formschluss. Dies kann der Übertragung einer fortlaufenden Bewegung dienen, um z.B. die Rotation der Antriebseinheit mit einem Verbrennungsmotor, mit einem Hybridmotor oder mit einem Elektromotor eines Fahrzeugs auf die Räder des Fahrzeugs zu übertragen. Es können jedoch auch Änderungen der Stellung der Abtriebseinheit auf diese Art und Weise vorgenommen werden, um z.B. eine Lenkbewegung eines Lenkrads eines elektromechanischen Lenksystems eines Fahrzeugs auf dessen Räder zu übertragen.

Als Antriebsriemen sind Zahnriemen bekannt, ebenso auch Flachriemen, Keilriemen oder Keilrippenriemen.

Eine während der Betriebszeit erforderliche Zustandsüberwachung an Antriebsriemen ist derzeit nur durch visuelle Inspektion und mechanische Prüfungen realisierbar. Bei gekapselten Riementrieben, d.h. bei Riementrieben, die in einem Staub und wasserdichten Gehäuse eingeschlossen sind, ist eine permanente visuelle Inspektion aus konstruktionsbedingten Gründen nicht möglich.

Gekapselte Riementriebe findet man insbesondere bei Lenkungsgetrieben für Fahrzeuge, da diese Getriebe in einem Bereich angeordnet sind, welcher rauen Umgebungsbedingungen und starken Verschmutzungen ausgesetzt ist. So sind Lenkungsriemengetriebe bisher oft auf eine Lebensdauer ausgelegt, die eine zwischenzeitliche Inspektion nicht unbedingt erforderlich macht. Durch eine solche Auslegungsmaxime gerät die Konstruktion jedoch schnell in eine Überdimensionierung aller Bauteile, was wiederum das Gewicht damit den Energieverbrauch erhöhen kann.

Bei Zahnriementrieben zum Beispiel ist ein wesentliches Beurteilungskriterium für den Zustand des Riemens die Detektion eines Zahnübersprungs. Der Zahnübersprung deutet auf ein späteres Riemenversagen hin, weshalb die frühzeitige Detektion für die Funktionssicherheit unbedingt relevant ist. Bei einem solchen Zahnübersprung dreht die Antriebsriemenscheibe bei Überlastung unterhalb des Riemens durch, der Zahn des Riemens springt auf der Riemenscheibe mehrfach über, sodass der Zahnbereich des Riemens verschleißt. Bisher ist eine Überwachung solcher Zahnübersprünge bzw. der Anzahl solcher Zahnübersprünge technisch nicht möglich.

Eine solche Überwachung wäre aber wünschenswert gerade für die mittlerweile aufkommenden autonomen Fahrfunktionen und Fahrzeuge. Für autonome Fahrzeuge ist der Zahnriemen in einem Lenksystem ein absolut sicherheitsrelevantes Bauteil und muss unbedingt überwacht werden. Bei einem vollständigen Ausfall der Kraftübertragung durch Riemen muss zudem eine Notfalleinrichtungen/ein Notfallsystem vorhanden sein damit das Fahrzeug weiterhin lenkbar bleibt.

So ist es auf jeden Fall sinnvoll, eine Überwachung der Drehungen der Riemenscheiben und der Riemen zu realisieren, um Zahnübersprünge als Hinweis auf einen bevorstehenden Ausfall des Riemens zu detektieren (predictive maintenance) und auch um frühzeitige Hinweise auf möglicherweise vorhandene Schäden am Riemen zu bekommen.

Die DE 10 2015 208679 A1 offenbart ein Verfahren zur Messung des Schlupfes zwischen einem Antriebsriemen und einer Riemenscheibe. Zur Bestimmung des Schlupfes wird die erste Drehzahl der Riemenscheibe an der Riemenscheibe gemessen, sowie eine Umfangsgeschwindigkeit des Riemens am Riemen gemessen, wobei die Umfangsgeschwindigkeit des Riemens in eine entsprechende zweite Drehzahl der Riemenscheibe umgerechnet wird. Um ein durch eine lastabhängige Dehnung des Riemens verfälschtes Messergebnis der Umfangsgeschwindigkeit des Riemens zu vermeiden, wird ein der Dehnung des Riemens proportionaler Parameter des Riementriebs ermittelt und zur Kompensation des dehnungsinduzierten Anteils der ermittelten zweiten Drehzahl genutzt.

Die ermittelten Drehzahlen liegen nachteiliger Weise lediglich für einen aktuellen Zeitpunkt vor.

Die US 2008/006097 A1 offenbart eine Vorrichtung zur gleichzeitigen Lebensdauerprüfung mehrerer Antriebsriemen verschiedener Längen.

Die EP 0 382 115 A2 betrifft eine Überwachungseinrichtung für einen Bandantrieb zur frühzeitigen Erfassung einer Materialermüdung eines Antriebsriemens. Der Antriebsriemen weist in seiner Längsrichtung zueinander gleich beabstandete Markierungen auf, wobei die Markierungen von zwei einander beabstandeten Abtasteinrichtungen abtastbar sind. Die Abtastsignale werden in einer an die Abstasteinrichtungen angeschlossnen Signalauswerteeinrichtung in Abhängigkeit vom Abstand der beiden Abtasteinrichtungen voneinander und der Laufgeschwindigkeit des Antriebsriemens in zeitlichen Bezug zueinander gesetzt.

Die US 9 228 909 B1 offenbart ein System zur Kraftmessung in einem Riementrieb. Der Riemen weist einander beabstandete Markierungen auf, deren Abstand sich in Folge einer sich ändernden Kraft verändert. Durch Detektion der Laufzeit zweier Markierungselemente kann eine Korrelation zu der Kraft im Riementrieb bzw, zu dem durch den Riemen übertragenen Drehmoment hergestellt werden.

Die Überwachung einer relativen Positionsveränderung des Riemens zu einer historischen Referenzposition wird durch den zuvor beschriebenen Stand der Technik nicht ermöglicht.

Die DE 20 2016 008 121 U1 offenbart hierzu einen Riemenantrieb, bestehend aus Riemenscheibe, Riemen und Überwachungseinrichtung. An dem Riemen und an der Riemenscheibe ist jeweils eine "Markierung" angebracht. Es wird ein Signal ausgelöst, wenn die Markierungen des Riemens und der Antriebsscheibe sich gegenüberstehen. Die Markierungen zur Identifikation der Position können auf verschiedenen Sensortechnologien beruhen, z.B. optischen, induktiven, kapazitiven oder magnetischen Effekten beruhen.

Mithilfe der dort beschriebenen Überwachung können unter anderem bei Zahn- oder Synchronriemen Übersprünge erfasst werden, die einen sofortigen Wartungseingriff erforderlich machen. Ebenso kann Schlupf erkannt werden. Auch lassen sich mit der dort beschriebenen Einrichtung unter Berücksichtigung weiterer Riemenparameter exakte Aussagen über Belastungen machen, denen der Riemen über einen jeweils zurückliegenden Zeitraum ausgesetzt war.

Auch die zu derselben Patentfamilie gehörige WO 2016 177883 A1 offenbart einen solchen Riemenantrieb, bei dem komplementären Markierungen an Riemen und Scheibe zur Überwachung vorgesehen sind. Hier ist auch das entsprechende Verfahren zur Überwachung beansprucht.

Allerdings weisen die hier beschriebenen Systeme und Verfahren den Nachteil auf, dass eine genaue Positionierung des Riemens in Bezug auf die Scheiben erfolgen muss, dass insbesondere nach Reparaturen, etwa nach dem Anbringen von Ersatzscheiben oder Ersatzriemen schwierig ist.

Für die Erfindung bestand also die Aufgabe, ein Überwachungsverfahren und einen dazu angepassten Riementrieb bereitzustellen, der ohne komplizierte Positionierungs-Einstellungs- und Montagearbeiten eine möglichst einfache Überwachung erlaubt, bei der zudem die Stellung und das Verhältnis zwischen Riemen und Scheibe beliebig sein kann. Weiterhin bestand die Aufgabe, ein Überwachungsverfahren bereitzustellen, welches in gewisser Weise selbstlernend auf Veränderungen der Antriebs- und Verschleißverhältnisse des Antriebssystems reagieren kann, ohne dass Kataloge von Parametern und Einstellungen ständig kontrolliert werden müssen.

Gelöst wird diese Aufgabe durch die Merkmale der unabhängigen Ansprüche 1, 11 und 12. Weitere vorteilhafte Ausbildungen sind in den Unteransprüchen offenbart.

Dabei weist der Rotor, also das rotierende Teil des Antriebsmotors genau eine zweite Markierung auf und es ist ein zweites mit entsprechenden elektronischen Einrichtungen versehenes und dem Antriebsmotor zugeordnetes Sensorelement vorgesehen. Während der Rotordrehung wird die Passage, d.h. das "Vorbeilaufen" der zweiten Markierung durch das zweite Sensorelement detektiert und ein von der Detektion der zweiten Markierung abhängiges Signal S_{M} ausgegeben. Weiterhin ist eine mit Speichern und Prozessoren versehene Recheneinheit zur Verarbeitung der Signale S_{R} und S_{M} vorgesehen, wobei in der Recheneinheit eine zeitliche oder örtliche Korrelation des Auftretens der Signalen S_{R} und S_{M} im Neuzustand des Antriebsriemens berechnet und als Referenzwert gespeichert wird. Danach werden für weitere festgelegte Riemenumläufe oder Zeiträume die zugehörigen Signale S_{R} und S_{M} wiederholt ermittelt und deren aktuelle zeitliche oder örtliche Korrelation des Auftretens mit dem Referenzwert verglichen, wobei nach Überschreiten eines festgelegten Toleranzwertes zwischen der aktuellen Korrelation und dem Referenzwert durch die Recheneinrichtung ein Warn- oder Alarmsignal ausgegeben wird.

Das erfinderische Verfahren benötigt im Hinblick auf die Grundeinstellung, d.h. die Positionierung von Riemen und Riemenscheibe keinerlei komplizierte Montage oder voreingestellt Korrelation. Die tatsächlich vorhandene Korrelation wird vielmehr durch einen selbst lernenden Prozess ermittelt und durch häufige Wiederholung und ständigen Vergleich mit dem im Neuzustand erhaltenen Referenzwert überprüft. Auf diese Weise sind Veränderungen innerhalb der Konstellation des Antriebsriemens und der zugehörigen Scheiben und übrigen Elemente beurteilbar.

So ist beispielsweise eine sehr einfache Zustandsüberwachung an Antriebsriemen ohne visuelle Inspektion und mechanische Prüfungen auch bei gekapselten Riementrieben realisierbar. Ein Zahnübersprung oder ein oberhalb bestimmter Grenzwerte liegendes Reiben oder Rutschen des Riemens kann so ohne weiteres festgestellt und in seinem Einfluss auf die Schädigung des Riemens oder des Getriebes beurteilt werden.

Ein Vergleich der aktuellen Korrelation des Auftretens der Signale mit dem Referenzwert lässt sich direkt oder auch abgeleitet über verschiedene Parameter durchführen. So sind einerseits eine örtliche Korrelation und andererseits eine Umrechnung in Drehzahlen und Umläufe vor dem Vergleich möglich.

Eine vorteilhafte Weiterbildung im Hinblick auf eine klar örtliche Korrelation besteht beispielsweise darin, dass das erste Sensorelement elektronische Einrichtungen zur Ausgabe eines zur Anzahl der Riemenumläufe proportionalen Signals S_{R} aufweist, dass durch das zweites Sensorelement die Rotorposition des Antriebsmotors ermittelt und als dazu proportionales Signal S_{M} ausgegeben wird, dass in der Recheneinheit das anfängliche und im Neuzustand des Riementriebs vorhandene Verhältnis zwischen einer festgelegten bzw. vorgegebenen Anzahl N_{R} von Riemenumläufen und der dazu ermittelten Rotorposition berechnet und als Referenzwert gespeichert wird, wobei danach für weitere der festgelegten Anzahl N_{R} entsprechenden Riemenumläufe die zugehörigen Rotorpositionen wiederholt ermittelt und deren aktuelles Verhältnis mit dem Referenzwert verglichen werden, wobei nach Überschreiten eines festgelegten Toleranzwertes zwischen dem aktuellen Verhältnis und dem Referenzwert durch die Recheneinrichtung ein Warn- oder Alarmsignal ausgegeben wird. Eine solche Ermittlung benötigt gegebenenfalls viel Speicherplatz in der Recheneinheit, ist jedoch über aus präzise und erkennt selbst kleinste Abweichungen in der Position des zweiten Sensorelementes bzw. der Rotorposition.

Eine weitere vorteilhafte Weiterbildung im Rahmen der Verwertung von Drehzahlen und Umläufen besteht darin, dass das erste Sensorelement elektronische Einrichtungen zur Ausgabe eines zur Anzahl der Riemenumläufe proportionalen Signals S_{R} aufweist, dass durch das zweite Sensorelement die Rotorumdrehungen des Antriebsmotors ermittelt und als ein der Drehzahl des Antriebsmotors proportionales Signal S_{M} ausgegeben werden, dass in der Recheneinheit im Neuzustand des Antriebsriemens vorhandene Verhältnis zwischen einer festgelegten bzw. vorgegebenen Anzahl N_{R} von Riemenumläufen und den dazu ermittelten Motorumdrehungen berechnet und als Referenzwert gespeichert wird, wobei danach für weitere der festgelegten Anzahl N_{R} entsprechenden Riemenumläufe die zugehörigen Motordrehzahlen wiederholt ermittelt und deren aktuelles Verhältnis mit dem Referenzwert verglichen werden, wobei nach Überschreiten eines festgelegten Toleranzwertes zwischen dem aktuellen Verhältnis und dem Referenzwert durch die Recheneinrichtung ein Warn- oder Alarmsignal ausgegeben wird. Die Anzahl der Riemenumläufe und die zugehörigen Motordrehzahlen können dabei so eingestellt und damit die Messwiederholungen oder Messperioden variabel so gestaltet werden, dass beispielsweise eine Messung pro Stunde oder pro Tag erfolgen kann.

Eine weitere vorteilhafte Ausbildung besteht darin, dass zur Überwachung eines mit mindestens zwei endlosen Antriebsriemen versehenen Riementriebs eines Lenkgetriebes, bei dem zwei auf einer durch einen Antriebsmotor angetriebenen gemeinsamen Antriebswelle angeordneten Antriebsscheiben vorgesehen sind. Bei einem solcherart mit einem redundanten Antrieb aufgebauten Lenkgetriebes sind auch zwei Abtriebsscheiben vorhanden, die auf einer gemeinsamen oder auf zwei Abtriebswellen angeordnet sind.

Beide Riemen weisen jeweils genau eine erste Markierung auf und beiden Riemen ist jeweils ein erstes Sensorelement zugeordnet, welches die jeweilige Riemenmarkierung detektiert. Die Sensorelemente weisen auch hier elektronische Einrichtungen zur Ausgabe von der Detektion der Riemenmarkierungen abhängigen Signalen S_{R1} und S_{R2} auf, wobei in der Recheneinheit eine zeitliche oder örtliche Korrelation des Auftretens der Signale S_{R1} , S_{R2} und S_{M} im Neuzustand des Antriebsriemens berechnet und als Referenzwert gespeichert werden, wobei danach für weitere festgelegte Riemenumläufe oder Zeiträume die zugehörigen Signale S_{R1} , S_{R2} und S_{M} wiederholt ermittelt und deren aktuelle zeitliche oder örtliche Korrelation des Auftretens mit dem Referenzwert verglichen werden.

Insbesondere im Zusammenwirken mit einer weiteren vorteilhaften Ausbildung, die darin besteht, dass in der Recheneinheit durch eine Veränderung der zeitlichen oder örtlichen Korrelation des Auftretens der Signale S_{R1} , S_{R2} und S_{M} ein Winkelversatz zwischen Antriebsriemen und Antriebsriemenscheibe und/oder zwischen den Antriebsriemen zueinander ermittelt wird, erhält man auch eine Aussage über das Verhältnis der beiden Antriebsriemen zueinander und ihren möglicherweise entstandenen Versatz beim Umlauf. Bei Lenkgetrieben mit redundanter Antriebsauslegung, also in unserem Fall mit zwei Antriebsriemen, von denen jeder für die Gesamtleistung ausgelegt ist, ist hier eine wichtige Überprüfungsmethode gegeben, die sowohl den Ausfall eines Riemens ermitteln bzw. den drohenden Ausfall eines Riemens voraus sagen kann, als auch nach einem solchen Ausfall einen einzelnen Riemen weiter überwachen lassen kann.

Eine weitere vorteilhafte Ausbildung besteht darin, dass der Toleranzwert zwischen dem aktuellen Verhältnis und dem Referenzwert als ein einem vorbestimmten Schlupf entsprechender Orts-, Zeit- oder Drehzahlunterschied festgelegt wird. Durch eine solche Maßnahme können neben dem selbstlernenden Verhalten des erfindungsgemäßen Verfahrens auch vorgegebene Kataloge in die Beurteilung einfließen.

Gleiches gilt für eine weitere vorteilhafte Ausbildung, die darin besteht, dass der oder die Antriebsriemen als Zahnriemen ausgebildet sind und als Toleranzwert zwischen dem aktuellen Verhältnis und dem Referenzwert mindestens ein einem Zahnübersprung entsprechender Orts-, Zeit- oder Drehzahlunterschied festgelegt wird.

Eine weitere vorteilhafte Ausbildung besteht darin, dass die Rotordrehung oder die Rotorposition über den CAN-Bus des Motors ermittelt und als Signal S_{M} ausgegeben und in der Recheneinheit zur Berechnung der Korrelationen verarbeitet wird. Durch eine solche Ausbildung geht man in bester Weise bereits vorhandene Systeme oder Signale zur Durchführung des erfindungsgemäßen Verfahrens.

Eine weitere vorteilhafte Ausbildung besteht darin, dass die Detektion der Riemenmarkierungen durch die zugehörigen Sensorelemente über optische, induktive, kapazitive oder magnetische Verfahren erfolgt. Die Art der Markierung und der Sensorik kann beliebig sein, solange durch die Sensoren entsprechende Signale bei der Passage der Markierung erzeugt werden.

Eine weitere vorteilhafte Ausbildung besteht darin, dass der Toleranzwert über den Einsatz eines Rechenprogramms in der Recheneinheit ermittelt wird, wobei das Rechenprogramm auf einem Verfahren künstlicher Intelligenz beruht. Ein solches auf den Prinzipien der künstlichen Intelligenz aufgebautes Anlernen des Referenzwertes und der zugehörigen Toleranzen ist insofern vorteilhaft, als ein und dasselbe Verfahren in einer entsprechend angepassten Recheneinheit auf die verschiedensten Getriebe und Leistungsübertragungen anpassbar ist.

Wie bereits oben dargestellt, findet sich eine besonders vorteilhafte Verwendung des erfindungsgemäßen Verfahrens in der Überwachung eines gekapselten und somit nach seiner Herstellung nicht mehr zugänglichen Lenkungsgetriebes mit zwei kraftübertragenden als Zugriemen ausgebildeten endlosen Antriebsriemen.

Ein Riementrieb, der in seiner gesamten Konzeption in vorteilhafter Weise und von vornherein auf die Verwendung des erfindungsgemäßen Verfahrens ausgelegt ist, weist die Merkmale des Anspruchs 12 auf.

Ein solcher Riementrieb ist ohne große Änderungen in der Herstellung für eine große Anwendungsbreite und viele Antriebsaufgaben zu verwenden und erlaubt eine präzise und einfache Kontrollmöglichkeit.

Eine vorteilhafte Ausbildung eines solchen Riementriebs besteht darin, dass die erste Markierung (11, 12) als ein schmaler, mit ferromagnetischen oder elektrisch leitfähigen Partikeln versehener Streifen auf dem Riemen, vorzugsweise auf dem Riemenrücken ausgebildet ist. Vorzugsweise nimmt man hier einen quer zur Längsrichtung des Riemens ausgebildeten Streifen, der ein deutliches und lokal eng begrenztes Signal beim Passieren des Sensors aus bildet.

Eine weitere vorteilhafte Ausbildung eines solchen Riementriebs besteht darin, dass die ferromagnetischen oder elektrisch leitfähigen Partikel in Form eines Mischungszusatzes im Grundmaterial des Riemens vorliegen
Eine weitere vorteilhafte Ausbildung eines solchen Riementriebs besteht darin, dass die ferromagnetischen oder elektrisch leitfähigen Partikel als Gummi- oder Gewebebedruckung aufgebracht werden. Insbesondere die beiden letztgenannten Ausbildungen sind dadurch vorteilhaft, dass die mechanischen Eigenschaften des Riemens nicht oder kaum merkbar beeinflusst werden und somit die Lebensdauer und Haltbarkeit des Riemens unbeeinflusst bleibt.

Angepasst auf ein Lenkungsgetriebe eines Kraftfahrzeugs, ergibt sich eine vorteilhafte Ausbildung dadurch, dass der Riementrieb zwei vorzugsweise als Zahnriemen ausgebildete Antriebszugriemen sowie zwei Antriebs- und Abtriebsscheiben aufweist, wobei die Antriebsscheiben und die Abtriebsscheiben jeweils auf einer gemeinsamen Welle laufend drehfest miteinander verbunden sind. Beide Antriebszugriemen weisen dann jeweils genau eine erste Markierung auf und es ist jeweils genau ein zugeordnetes Sensorelement zur Detektion der Riemenmarkierung vorgesehen, wobei die Sensorelemente eine elektronische Einrichtung zur Ausgabe der von der Detektion der Markierungen abhängigen Signals S_{R1} und S_{R2} aufweisen.

Eine mit Speichern und Prozessoren versehene Recheneinheit zur Verarbeitung der Signale S_{R1} , S_{R2} und S_{M} ist ebenfalls vorgesehen. Die Verarbeitung erfolgt dabei so, wie oben bereits für ein redundant aufgebautes Lenkgetriebe beschrieben.

Anhand eines Ausführungsbeispiels soll die Erfindung näher erläutert werden. Es zeigen
- Fig. 1: prinzipiell die Ausbildung eines erfindungsgemäßen Lenkungsgetriebes,
- Fig. 2: das Lenkungsgetriebes gemäß Fig.1 nach einem oder mehreren Zahnübersprüngen,
- Fig. 3: einen typischen Signalverlauf für eine vollständige Motorumdrehung bei Verwendung eines handelsüblichen inkremental arbeitenden Positionsencoders.

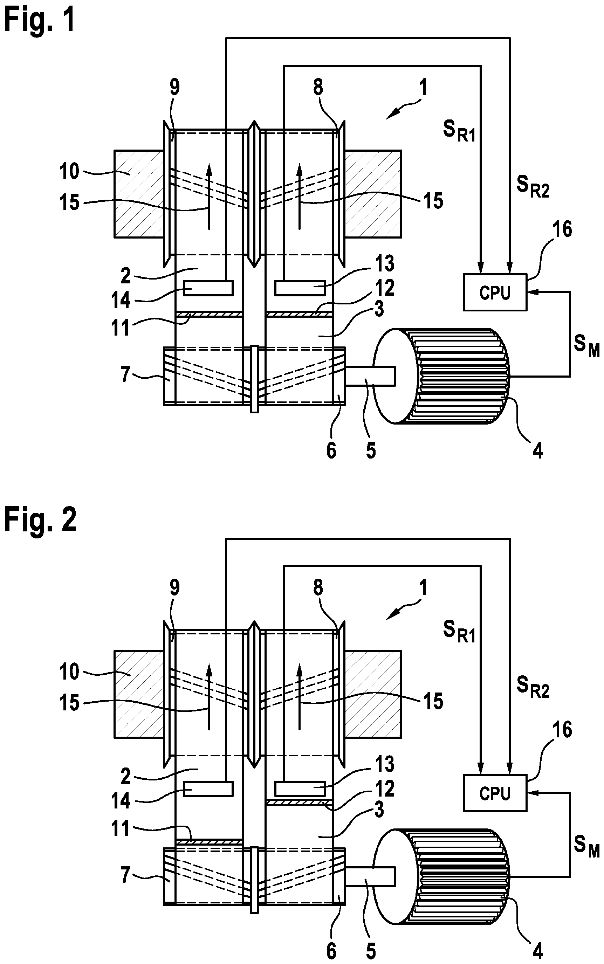

Die Fig. 1 zeigt in Form einer Prinzipskizze die Ausbildung eines Lenkungsgetriebes 1 eines PKW, bei dem eine redundante Auslegung mit zwei parallellaufenden Zahnriemen 2, 3 als endlosen Antriebsriemen gewählt ist. Jeder Zahnriemen ist so ausgelegt, dass er im Falle des Ausfalls des jeweils anderen Zahnriemens die gesamte Leistung übertragen kann und so also auch im Schadensfall eine sichere Lenkbarkeit des Fahrzeugs gewährleisten kann.

Weiterhin sind zwei auf einer durch einen als Elektromotor ausgebildeten Antriebsmotor 4 angetriebenen gemeinsamen Antriebswelle 5 angeordnete gezahnte Antriebsscheiben 6, 7 vorgesehen. Bei dem solcherart mit einem redundanten Antrieb aufgebauten Lenkgetriebe sind auch zwei Abtriebsscheiben 8, 9 vorhanden, die auf einer gemeinsamen Abtriebswelle 10 angeordnet sind. Beide Riemen 2, 3 weisen jeweils eine erste Riemenmarkierung 11, 12 auf, hier ausgebildet als über die jeweilige Riemenbreite auf der Riemenrückseite aufgebrachte Streifen aus polymerem Material mit magnetisierbaren Partikeln. Beiden Riemen ist jeweils ein Sensorelement 13, 14 zugeordnet, welches die jeweilige Riemenmarkierung 11, 12 detektiert, sobald sie den Sensor passiert, d.h. hier unterhalb des Sensors durchläuft. Die Sensorelemente weisen jeweils hier nicht näher dargestellte elektronische Einrichtungen zur Ausgabe von Signalen S_{R1} und S_{R2} auf, die von der Detektion der Riemenmarkierungen abhängen, also immer dann ausgegeben werden, wenn bei in Antriebsrichtung 15 umlaufenden Riemen 2, 3 die Passage der Markierung 11, 12 durch die Sensorelemente 13, 14 entdeckt wird.

Der hier nicht näher dargestellte Rotor des Antriebsmotors weist genau eine zweite Markierung auf sowie ein zweites mit entsprechenden elektronischen Einrichtungen versehenes und dem Antriebsmotor zugeordnetes Sensorelement, das die Rotordrehung detektiert, d.h., dass während der Rotordrehung die Passage der zweiten Markierungen durch das zweite Sensorelement detektiert und ein von der Detektion der zweiten Markierung abhängiges Signal S_{M} ausgegeben wird.

Zu diesem Zweck ist hier der Rotor des Elektromotors 4 mit einem handelsüblichen inkremental arbeitenden Positionsencoder versehen, der als Inkrementalwertgeber direkt während der Motordrehung die Position des Rotors detektieren lässt und daraus auch die Drehzahl ermitteln lässt. Somit ist ein von Position und/oder Drehzahl abhängiges Signal S_{M} für die Motorposition und Motordrehungen ausgebbar.

Weiterhin ist eine CPU (central processor unit) vorgesehen, nämlich eine mit Speichern und Prozessoren versehene Recheneinheit 16 zur Verarbeitung der Signale S_{R1} , S_{R2} und S_{M}. In der Recheneinheit wird die zeitliche oder örtliche Korrelation des Auftretens der Signalen S_{R1} , S_{R2} und S_{M} im Neuzustand des Antriebsriemens berechnet und als Referenzwert gespeichert. Danach werden für weitere festgelegte Riemenumläufe oder Zeiträume die entsprechenden zugehörigen Signale wiederholt ermittelt und deren aktuelle zeitliche oder örtliche Korrelation des Auftretens mit dem Referenzwert verglichen, wobei nach Überschreiten eines festgelegten Toleranzwertes zwischen der aktuellen Korrelation und dem Referenzwert durch die Recheneinrichtung ein Warn- oder Alarmsignal ausgegeben wird.

Bei dem hier vorgestellten Ausführungsbeispiel werden einerseits zur Anzahl der jeweiligen Riemenumläufe proportionale Signals S_{R1} und S_{R2} erzeugt und andererseits die Rotorumdrehungen des Antriebsmotors ermittelt und als ein der Drehzahl des Antriebsmotors proportionales Signal S_{M} ausgegeben.

Mit einer solchen Ausbildung kann in der Recheneinheit durch eine Veränderung der zeitlichen oder örtlichen Korrelation des Auftretens der Signale S_{R1} , S_{R2} und S_{M} auch ein Winkelversatz zwischen Antriebsriemen und Antriebsriemenscheibe und/oder zwischen den Antriebsriemen zueinander ermittelt werden. Man erhält so auch eine Aussage über das Verhältnis der beiden Antriebsriemen zueinander und ihren möglicherweise entstandenen Versatz beim Umlauf. Bei Lenkgetrieben ist so eine wichtige Überprüfungsmethode gegeben, die sowohl den Ausfall eines Riemens ermitteln bzw. den drohenden Ausfall eines Riemens voraus sagen kann, als auch nach einem solchen Ausfall einen einzelnen Riemen weiter überwachen lassen kann.

Fig. 2 zeigt einen solchen Fall, wobei nach einem oder mehreren Zahnübersprüngen aufgrund von Überlastung ein Umlaufversatz zwischen den Antriebsriemen 2 und 3 und damit auch ein Winkelversatz zwischen einem der Antriebsriemen und der zugehörigen Antriebsriemenscheibe des Zahnriemens entstanden ist. Auch wenn danach die Lenkfähigkeit ohne Weiteres vorhanden bleibt, so ist doch mindestens einer der beiden Riemen überlastet worden, so dass, evtl. nach einem entsprechenden Katalog von Lastkollektiven ein Riemenaustausch erforderlich sein könnte. Bei einem gekapselten Lenkungsgetriebe eines PKW wäre ohne das erfindungsgemäße Verfahren eine solche präzise Überprüfung nicht möglich und der Zahnübersprung bliebe unentdeckt.

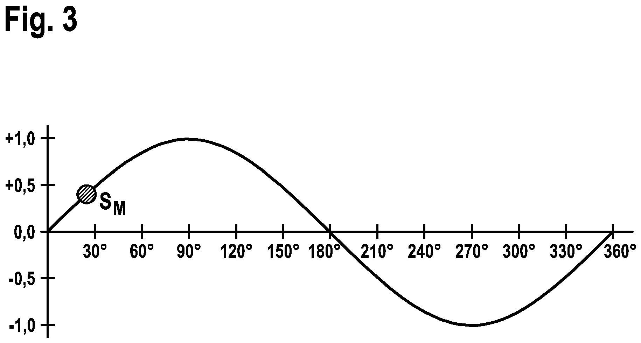

Fig. 3 zeigt nur zur Verdeutlichung prinzipiell die Rotorposition, nämlich einen typischen Signalverlauf für eine vollständige Motorumdrehung bei Verwendung eines handelsüblichen inkremental arbeitenden Positionsencoders, wobei die jeweilige Position durch den Signalwert S_{M} dargestellt wird. Die Korrelation dieses Signalwertes mit den Signalwerten S_{R1} und S_{R2} ermöglicht so die erfindungsgemäße Verfahrensweise.

### Bezugszeichenliste (Teil der Beschreibung)

- 1: Lenkungsgetriebe
- 2: Zahnriemen
- 3: Zahnriemen
- 4: Antriebsmotor/Elektromotor
- 5: Antriebswelle
- 6: Antriebsscheibe
- 7: Antriebsscheibe
- 8: Abtriebsscheibe
- 9: Abtriebsscheibe
- 10: Abtriebswelle
- 11: Riemenmarkierung
- 12: Riemenmarkierung
- 13: Sensorelement
- 14: Sensorelement
- 15: Antriebsrichtung
- 16: Recheneinheit (CPU)

## Patentansprüche

1. Verfahren zur Überwachung eines Riementriebs mit mindestens einer durch einen Antriebsmotor (4) angetriebenen Antriebsscheibe (6, 7), einer Abtriebsscheibe (8, 9) und mindestens einem kraftübertragenden als Zugriemen ausgebildeten endlosen Antriebsriemen (2, 3), der Antriebs- und Abtriebsscheibe umlaufend über jeweils einen Teilumfang umschlingt, wobei der Riemen (2, 3) genau eine erste Markierung (11, 12) aufweist und genau ein dem Riemen zugeordnetes erstes Sensorelement (13, 14) vorgesehen ist, wobei während des Riemenumlaufs die Passage der ersten Markierung (11, 12) durch das erste Sensorelement (13, 14) detektiert wird und das erste Sensorelement elektronische Einrichtungen zur Ausgabe eines von der Detektion der ersten Markierung (11, 12) abhängigen Signals S_{R} aufweist, **dadurch gekennzeichnet, dass** der Rotor des Antriebsmotors (4) genau eine zweite Markierung aufweist und genau ein zweites mit entsprechenden elektronischen Einrichtungen versehenes und dem Antriebsmotor zugeordnetes Sensorelement vorgesehen ist, wobei während der Rotordrehung die Passage der zweiten Markierung durch das zweite Sensorelement detektiert und ein von der Detektion der zweiten Markierung abhängiges Signal S_{M} ausgegeben wird, dass weiterhin eine mit Speichern und Prozessoren versehene Recheneinheit (16) zur Verarbeitung der Signale S_{R} und S_{M} vorgesehen ist, wobei in der Recheneinheit eine zeitliche oder örtliche Korrelation des Auftretens der Signalen S_{R} und S_{M} im Neuzustand des Antriebsriemens (2, 3) berechnet und als Referenzwert gespeichert wird, wobei danach für weitere festgelegte Riemenumläufe oder Zeiträume die zugehörigen Signale S_{R} und S_{M} wiederholt ermittelt und deren aktuelle zeitliche oder örtliche Korrelation des Auftretens mit dem Referenzwert verglichen werden, wobei nach Überschreiten eines festgelegten Toleranzwertes zwischen der aktuellen Korrelation und dem Referenzwert durch die Recheneinrichtung ein Warn- oder Alarmsignal ausgegeben wird.

2. Verfahren nach Anspruch 1, **dadurch gekennzeichnet, dass** das erste Sensorelement (13, 14) elektronische Einrichtungen zur Ausgabe eines zur Anzahl der Riemenumläufe proportionalen Signals S_{R} aufweist, dass durch das zweites Sensorelement die Rotorposition des Antriebsmotors (4) ermittelt und als dazu proportionales Signal S_{M} ausgegeben wird, dass in der Recheneinheit das anfängliche und im Neuzustand des Riementriebs vorhandene Verhältnis zwischen einer festgelegten Anzahl N_{R} von Riemenumläufen und der dazu ermittelten Rotorposition berechnet und als Referenzwert gespeichert wird, wobei danach für weitere der festgelegten Anzahl N_{R} entsprechenden Riemenumläufe die zugehörigen Rotorpositionen wiederholt ermittelt und deren aktuelles Verhältnis mit dem Referenzwert verglichen werden, wobei nach Überschreiten eines festgelegten Toleranzwertes zwischen dem aktuellen Verhältnis und dem Referenzwert durch die Recheneinrichtung ein Warn- oder Alarmsignal ausgegeben wird.

3. Verfahren nach Anspruch 1, **dadurch gekennzeichnet, dass** das erste Sensorelement (13, 14) elektronische Einrichtungen zur Ausgabe eines zur Anzahl der Riemenumläufe proportionalen Signals S_{R} aufweist, dass durch das zweite Sensorelement die Rotorumdrehungen des Antriebsmotors ermittelt und als ein der Drehzahl des Antriebsmotors proportionales Signal S_{M} ausgegeben werden, dass in der Recheneinheit (16) im Neuzustand des Antriebsriemens vorhandene Verhältnis zwischen einer festgelegten Anzahl N_{R} von Riemenumläufen und den dazu ermittelten Motorumdrehungen berechnet und als Referenzwert gespeichert wird, wobei danach für weitere der festgelegten Anzahl N_{R} entsprechenden Riemenumläufe die zugehörigen Motordrehzahlen wiederholt ermittelt und deren aktuelles Verhältnis mit dem Referenzwert verglichen werden, wobei nach Überschreiten eines festgelegten Toleranzwertes zwischen dem aktuellen Verhältnis und dem Referenzwert durch die Recheneinrichtung ein Warn- oder Alarmsignal ausgegeben wird.

4. Verfahren nach einem der Ansprüche 1 bis 3 zur Überwachung eines Riementriebs mit zwei auf einer durch einen Antriebsmotor angetriebenen gemeinsamen Antriebswelle (5) angeordneten Antriebsscheiben (6, 7), zwei Abtriebsscheiben (8, 9), die auf einer gemeinsamen (10) oder auf zwei Abtriebswellen angeordnet sind, und mindestens zwei endlosen Antriebsriemen (2, 3), wobei beide Riemen jeweils genau eine erste Markierung (11, 12) aufweisen und beiden Riemen jeweils genau ein erstes Sensorelement (13 14) zugeordnet ist, welches die jeweilige Riemenmarkierung detektiert, wobei die Sensorelemente elektronische Einrichtungen zur Ausgabe von der Detektion der Riemenmarkierungen abhängigen Signalen S_{R1} und S_{R2} aufweisen, wobei in der Recheneinheit (16) eine zeitliche oder örtliche Korrelation des Auftretens der Signale S_{R1} , S_{R2} und S_{M} im Neuzustand des Antriebsriemens berechnet und als Referenzwert gespeichert werden, wobei danach für weitere festgelegte Riemenumläufe oder Zeiträume die zugehörigen Signale S_{R1} , S_{R2} und S_{M} wiederholt ermittelt und deren aktuelle zeitliche oder örtliche Korrelation des Auftretens mit dem Referenzwert verglichen werden.

5. Verfahren nach Anspruch 4, bei dem in der Recheneinheit durch eine Veränderung der zeitlichen oder örtlichen Korrelation des Auftretens der Signale S_{R1} , S_{R2} und S_{M} ein Winkelversatz zwischen Antriebsriemen (2, 3) und Antriebsriemenscheibe (6, 7) und/oder zwischen den Antriebsriemen (2, 3) zueinander ermittelt wird.

6. Verfahren nach einem der Ansprüche 1 bis 5, bei dem der Toleranzwert zwischen dem aktuellen Verhältnis und dem Referenzwert als ein einem vorbestimmten Schlupf entsprechender Orts-, Zeit- oder Drehzahlunterschied festgelegt wird.

7. Verfahren nach einem der Ansprüche 1 bis 5, bei dem der oder die Antriebsriemen (2, 3) als Zahnriemen ausgebildet sind und als Toleranzwert zwischen dem aktuellen Verhältnis und dem Referenzwert mindestens ein einem Zahnübersprung entsprechender Orts-, Zeit- oder Drehzahlunterschied festgelegt wird.

8. Verfahren nach einem der Ansprüche 1 bis 7, bei dem die Rotordrehung oder die Rotorposition über den CAN-Bus des Motors ermittelt und als und als Signal S_{M} ausgegeben und in der Recheneinheit zur Berechnung des Korrelationen verarbeitet wird.

9. Verfahren nach einem der Ansprüche 1 bis 8, wobei die Detektion der Riemenmarkierungen durch die zugehörigen Sensorelemente über optische, induktive, kapazitive oder magnetische Verfahren erfolgt.

10. Verfahren nach einem der Ansprüche 1 bis 9, bei dem der Toleranzwert über den Einsatz eines Rechenprogramms in der Recheneinheit ermittelt wird, wobei das Rechenprogramm auf einem Verfahren künstlicher Intelligenz beruht.

11. Verwendung des Verfahrens nach Anspruch 1 bis 10 zu Überwachung eines Lenkungsgetriebes mit zwei kraftübertragenden als Zugriemen ausgebildeten endlosen Antriebsriemen, vozugsweise als Zahnriemen ausgebildeten Antriebsriemen.

12. Riementrieb (1) mit mindestens einer durch einen elektrischen Antriebsmotor (4) angetriebenen Antriebsscheibe (6, 7), einer Abtriebsscheibe (8, 9) und mindestens einem kraftübertragenden als Zugriemen ausgebildeten endlosen Antriebsriemen (2, 3), der Antriebs- und Abtriebsscheibe umlaufend über jeweils einen Teilumfang umschlingt, wobei der Riemen genau eine erste Markierung (11, 12) aufweist und genau ein dem Riemen zugeordnetes erstes Sensorelement (13, 14) zur Detektion der ersten Markierung vorgesehen ist, wobei das erste Sensorelement eine elektronische Einrichtungen zur Ausgabe eines von der Detektion der ersten Markierung abhängigen Signals S_{R} aufweist, **dadurch gekennzeichnet, dass** der Rotor des elektrischen Antriebsmotors (4) genau eine zweite Markierung aufweist und genau ein zweites mit entsprechenden elektronischen Einrichtungen versehenes und dem Antriebsmotor zugeordnetes Sensorelement vorgesehen ist, wobei während der Rotordrehung die Passage der zweiten Markierung durch das zweite Sensorelement detektierbar ist und ein von Position oder Drehzahl abhängiges Signal S_{M} ausgebbar ist, dass weiterhin eine mit Speichern und Prozessoren versehene Recheneinheit (16) zur Verarbeitung der Signale S_{R} und S_{M} vorgesehen ist, wobei in der Recheneinheit eine zeitliche oder örtliche Korrelation des Auftretens der Signalen S_{R} und S_{M} im Neuzustand des Antriebsriemens berechenbar und als Referenzwert speicherbar und mit entsprechenden Korrelationen für wiederholte, weitere festgelegte Riemenumläufe oder Zeiträume vergleichbar ist, wobei nach Überschreiten eines festgelegten Toleranzwertes zwischen der aktuellen Korrelation und dem Referenzwert durch die Recheneinrichtung ein Warn- oder Alarmsignal erzeugbar ist.

13. Riementrieb nach Anspruch 12, bei dem die erste Markierung (11, 12) als ein schmaler, mit ferromagnetischen oder elektrisch leitfähigen Partikeln versehener Streifen auf dem Riemen, vorzugsweise auf dem Riemenrücken ausgebildet ist.

14. Riementrieb nach Anspruch 13, bei dem die ferromagnetischen oder elektrisch leitfähigen Partikel in Form eines Mischungszusatzes im Grundmaterial des Riemens vorliegen

15. Riementrieb nach Anspruch 13, bei dem die ferromagnetischen oder elektrisch leitfähigen Partikel als Gummi- oder Gewebebedruckung aufgebracht werden.

16. Riementrieb nach einem der Ansprüche 12 bis 14 in einem Lenkungsgetriebe eines Kraftfahrzeugs, wobei der Riementrieb zwei vorzugsweise als Zahnriemen ausgebildete Antriebszugriemen (2, 3) sowie zwei Antriebs- und Abtriebsscheiben aufweist, wobei die Antriebsscheiben (6, 7) und die Abtriebsscheiben (8, 9) jeweils auf einer gemeinsamen Welle (5, 10) laufend drehfest miteinander verbunden sind, wobei beide Antriebszugriemen (2, 3) jeweils genau eine erste Markierung (11, 12) aufweisen und jeweils genau ein zugeordnetes erstes Sensorelement (13, 14) zur Detektion der Riemenmarkierungen vorgesehen ist, wobei die Sensorelemente eine elektronische Einrichtungen zur Ausgabe der von der Detektion der Markierungen abhängigen Signals S_{R1} und S_{R2} aufweisen, wobei weiterhin eine mit Speichern und Prozessoren versehene Recheneinheit (16) zur Verarbeitung der Signale S_{R1} , S_{R2} und S_{M} gemäß Anspruch 4 oder 5 vorgesehen ist.

## Claims

1. Method for monitoring a belt drive with at least one drive pulley (6, 7) driven by a drive motor (4), a driven pulley (8, 9) and at least one power-transmitting endless drive belt (2, 3) which is in the form of a traction belt and wraps around the drive and driven pulleys circumferentially over a partial circumference in each case, wherein the belt (2, 3) has precisely one first marking (11, 12) and precisely one first sensor element (13, 14) assigned to the belt is provided, wherein the passage of the first marking (11, 12) is detected by the first sensor element (13, 14) during the belt revolution and the first sensor element has electronic devices for outputting a signal S_{R} dependent on the detection of the first marking (11, 12), **characterized in that** the rotor of the drive motor (4) has precisely one second marking and precisely one second sensor element which is provided with corresponding electronic devices and is assigned to the drive motor is provided, wherein, while the rotor is rotating, the passage of the second marking is detected by the second sensor element and a signal S_{M} dependent on the detection of the second marking is output, **in that**, furthermore, a computing unit (16) provided with memories and processors for processing the signals S_{R} and S_{M} is provided, wherein a temporal or local correlation of the occurrence of the signals S_{R} and S_{M} is calculated in the computing unit when the drive belt (2, 3) is new and is stored as a reference value, wherein the associated signals S_{R} and S_{M} are then repeatedly determined for further specified belt revolutions or periods of time and their current temporal or local correlation of the occurrence is compared with the reference value, wherein a warning or alarm signal is output by the computing device after a specified tolerance value between the current correlation and the reference value has been exceeded.

2. Method according to Claim 1, **characterized in that** the first sensor element (13, 14) has electronic devices for outputting a signal S_{R} proportional to the number of belt revolutions, **in that** the rotor position of the drive motor (4) is determined by the second sensor element and is output as a signal S_{M} proportional thereto, **in that** the initial relationship between a specified number N_{R} of belt revolutions and the rotor position determined for this, which is present when the belt drive is new, is calculated in the computing unit and is stored as a reference value, wherein the associated rotor positions are then repeatedly determined for further belt revolutions corresponding to the specified number N_{R} and their current relationship is compared with the reference value, wherein a warning or alarm signal is output by the computing device after a specified tolerance value between the current relationship and the reference value has been exceeded.

3. Method according to Claim 1, **characterized in that** the first sensor element (13, 14) has electronic devices for outputting a signal S_{R} proportional to the number of belt revolutions, **in that** the rotor revolutions of the drive motor are determined by the second sensor element and are output as a signal S_{M} proportional to the speed of the drive motor, **in that** the relationship between a specified number N_{R} of belt revolutions and the motor revolutions determined for this, which is present when the drive belt is new, is calculated in the computing unit (16) and is stored as a reference value, wherein the associated motor speeds are then repeatedly determined for further belt revolutions corresponding to the specified number N_{R} and their current relationship is compared with the reference value, wherein a warning or alarm signal is output by the computing device after a specified tolerance value between the current relationship and the reference value has been exceeded.

4. Method according to one of Claims 1 to 3 for monitoring a belt drive with two drive pulleys (6, 7) arranged on a common drive shaft (5) driven by a drive motor, two driven pulleys (8, 9) arranged on a common output shaft (10) or on two output shafts, and at least two endless drive belts (2, 3), wherein both belts each have precisely one first marking (11, 12) and both belts are each assigned precisely one first sensor element (13, 14) which detects the respective belt marking, wherein the sensor elements have electronic devices for outputting signals S_{R1} and S_{R2} which are dependent on the detection of the belt markings, wherein a temporal or local correlation of the occurrence of the signals S_{R1}, S_{R2} and S_{M} is calculated in the computing unit (16) when the drive belt is new and is stored as a reference value, wherein the associated signals S_{R1}, S_{R2} and S_{M} are then repeatedly determined for further specified belt revolutions or periods of time and their current temporal or local correlation of the occurrence is compared with the reference value.

5. Method according to Claim 4, in which an angular offset between the drive belt (2, 3) and the drive belt pulley (6, 7) and/or between the drive belts (2, 3) is determined in the computing unit by way of a change in the temporal or local correlation of the occurrence of the signals S_{R1}, S_{R2} and S_{M}.

6. Method according to one of Claims 1 to 5, in which the tolerance value between the current relationship and the reference value is specified as a difference in location, time or speed corresponding to a predetermined slip.

7. Method according to one of Claims 1 to 5, in which the drive belt or belts (2, 3) is/are in the form of toothed belts and at least one difference in location, time or speed corresponding to a skipped tooth is specified as the tolerance value between the current relationship and the reference value.

8. Method according to one of Claims 1 to 7, in which the rotor rotation or the rotor position is determined via the CAN bus of the motor and is output as a signal S_{M} and is processed in the computing unit for the purpose of calculating the correlations.

9. Method according to one of Claims 1 to 8, wherein the belt markings are detected by the associated sensor elements using optical, inductive, capacitive or magnetic methods.

10. Method according to one of Claims 1 to 9, in which the tolerance value is determined using a computing program in the computing unit, wherein the computing program is based on an artificial intelligence method.

11. Use of the method according to Claims 1 to 10 for monitoring a steering gear with two power-transmitting, endless drive belts in the form of traction belts, preferably drive belts in the form of toothed belts.

12. Belt drive (1) with at least one drive pulley (6, 7) driven by an electric drive motor (4), a driven pulley (8, 9) and at least one power-transmitting endless drive belt (2, 3) which is in the form of a traction belt and wraps around the drive and driven pulleys circumferentially over a partial circumference in each case, wherein the belt has precisely one first marking (11, 12) and precisely one first sensor element (13, 14) which is assigned to the belt and is intended to detect the first marking is provided, wherein the first sensor element has electronic devices for outputting a signal S_{R} dependent on the detection of the first marking, **characterized in that** the
rotor of the electric drive motor (4) has precisely one second marking and precisely one second sensor element which is provided with corresponding electronic devices and is assigned to the drive motor is provided, wherein, while the rotor is rotating, the passage of the second marking can be detected by the second sensor element and a
signal S_{M} dependent on the position or speed can be output, **in that**, furthermore, a computing unit (16) provided with memories and processors for processing the signals S_{R} and S_{M} is provided, wherein a temporal or local correlation of the occurrence of the signals S_{R} and S_{M} can be calculated in the computing unit when the drive belt is new and can be stored as a reference value and can be compared with corresponding correlations for repeated, further specified belt revolutions or periods of time, wherein a warning or alarm signal can be generated by the computing device after a specified tolerance value between the current correlation and the reference value has been exceeded.

13. Belt drive according to Claim 12, in which the first marking (11, 12) is designed as a narrow strip provided with ferromagnetic or electrically conductive particles on the belt, preferably on the back of the belt.

14. Belt drive according to Claim 13, in which the ferromagnetic or electrically conductive particles are present in the form of a mixture additive in the base material of the belt.

15. Belt drive according to Claim 13, in which the ferromagnetic or electrically conductive particles are applied as a rubber or fabric imprint.

16. Belt drive according to one of Claims 12 to 14 in a steering gear of a motor vehicle, wherein the belt drive has two drive traction belts (2, 3), preferably in the form of toothed belts, as well as two drive and driven pulleys, wherein the drive pulleys (6, 7) and the driven pulleys (8, 9) are each continuously connected to one another in a rotationally fixed manner on a common shaft (5, 10), wherein both drive traction belts (2, 3) each have precisely one first marking (11, 12) and precisely one associated first sensor element (13, 14) for detecting the belt markings is respectively provided, wherein the sensor elements have electronic devices for outputting the signals S_{R1} and S_{R2} which are dependent on the detection of the markings, wherein a computing unit (16) provided with memories and processors for processing the signals S_{R1}, S_{R2} and S_{M} according to Claim 4 or 5 is also provided.

## Revendications

1. Procédé de surveillance d'un entraînement par courroie comprenant au moins une poulie d'entraînement (6, 7) entraînée par un moteur d'entraînement (4), une poulie de sortie (8, 9) et au moins une courroie d'entraînement (2, 3) sans fin de transmission de force, réalisée sous forme d'une courroie de traction, qui s'enroule autour de la poulie d'entraînement et de la poulie de sortie respectivement sur une circonférence partielle, la courroie (2, 3) possédant exactement un premier repère (11, 12) et exactement un premier élément de détection (13, 14) associé à la courroie étant présent, le passage du premier repère (11, 12) étant détecté par le premier élément de détection (13, 14) pendant la rotation de la courroie et le premier élément de détection possédant des dispositifs électroniques destinés à délivrer un signal S_{R} dépendant de la détection du premier repère (11, 12), **caractérisé en ce que** le rotor du moteur d'entraînement (4) possède exactement un deuxième repère et qu'exactement un deuxième élément de détection pourvu de dispositifs électroniques correspondants et associé au moteur d'entraînement est présent, le passage du deuxième repère étant détecté par le deuxième élément de détection pendant la rotation du rotor et un signal S_{M} dépendant de la détection du deuxième repère étant délivré, **en ce qu'**une unité de calcul (16) pourvue de mémoires et de processeurs est en outre présente pour le traitement des signaux S_{R} et S_{M}, une corrélation temporelle ou locale de la survenance des signaux S_{R} et S_{M} à l'état neuf de la courroie d'entraînement (2, 3) étant calculée dans l'unité de calcul et mémorisée en tant que valeur de référence, les signaux S_{R} et S_{M} associés étant ensuite déterminés de manière répétée pour des tours de courroie ou des périodes supplémentaires spécifiés et leur corrélation temporelle ou locale actuelle de la survenance étant comparée à la valeur de référence, un signal d'avertissement ou d'alarme étant délivré par le dispositif de calcul après dépassement d'une valeur de tolérance spécifiée entre la corrélation actuelle et la valeur de référence.

2. Procédé selon la revendication 1, **caractérisé en ce que** le premier élément de détection (13, 14) possède des dispositifs électroniques destinés à délivrer un signal S_{R} proportionnel au nombre de tours de courroie, **en ce que** la position de rotor du moteur d'entraînement (4) est déterminée par le deuxième élément de détection et délivrée sous la forme d'un signal S_{M} proportionnel à celle-ci, **en ce que** le rapport initial et existant à l'état neuf de l'entraînement par courroie entre un nombre N_{R} spécifié de tours de courroie et la position de rotor déterminée à cet effet est calculé dans l'unité de calcul et mémorisé en tant que valeur de référence, les positions de rotor associées étant ensuite déterminées de manière répétée pour des tours de courroie supplémentaires correspondant au nombre N_{R} spécifié et leur rapport actuel étant comparé à la valeur de référence, un signal d'avertissement ou d'alarme étant délivré par le dispositif de calcul après dépassement d'une valeur de tolérance spécifiée entre le rapport actuel et la valeur de référence.

3. Procédé selon la revendication 1, **caractérisé en ce que** le premier élément de détection (13, 14) possède des dispositifs électroniques destinés à délivrer un signal S_{R} proportionnel au nombre de tours de courroie, **en ce que** les tours de rotor du moteur d'entraînement sont déterminés par le deuxième élément de détection et délivrés sous la forme d'un signal S_{M} proportionnel à la vitesse de rotation du moteur d'entraînement, **en ce que** le rapport existant à l'état neuf de l'entraînement par courroie entre un nombre N_{R} spécifié de tours de courroie et les tours de moteur déterminés à cet effet est calculé dans l'unité de calcul (16) et mémorisé en tant que valeur de référence, les vitesses de rotation de moteur associées étant ensuite déterminées de manière répétée pour des tours de courroie supplémentaires correspondant au nombre N_{R} spécifié et leur rapport actuel étant comparé à la valeur de référence, un signal d'avertissement ou d'alarme étant délivré par le dispositif de calcul après dépassement d'une valeur de tolérance spécifiée entre le rapport actuel et la valeur de référence.

4. Procédé selon l'une des revendications 1 à 3 de surveillance d'un entraînement par courroie comprenant deux poulies d'entraînement (6, 7) disposées sur un arbre d'entraînement commun (5) entraîné par un moteur d'entraînement, deux poulies de sortie (8, 9) qui sont disposées sur un arbre de sortie commun (10) ou sur deux arbres de sortie, et au moins deux courroies d'entraînement (2, 3) sans fin, les deux courroies possédant chacune exactement un premier repère (11, 12) et exactement un premier élément de détection (13, 14) étant respectivement associé aux deux courroies, lequel détecte le repère de courroie respectif, les éléments de détection possédant des dispositifs électroniques destinés à délivrer des signaux S_{R1} et S_{R2} dépendant de la détection des repères de courroie, une corrélation temporelle ou locale de la survenance des signaux S_{R1}, S_{R2} et S_{M} à l'état neuf de la courroie d'entraînement étant calculée dans l'unité de calcul (16) et mémorisée en tant que valeur de référence, les signaux S_{R1}, S_{R2} et S_{M} associés étant ensuite déterminés de manière répétée pour des tours de courroie ou des périodes spécifiés supplémentaires et leur corrélation temporelle ou locale actuelle de la survenance étant comparée à la valeur de référence.

5. Procédé selon la revendication 4, un décalage angulaire entre la courroie d'entraînement (2, 3) et la poulie d'entraînement (6, 7) et/ou entre les courroies d'entraînement (2, 3) l'une par rapport à l'autre étant déterminé dans l'unité de calcul par une modification de la corrélation temporelle ou locale de la survenance des signaux S_{R1}, S_{R2} et S_{M}.

6. Procédé selon l'une des revendications 1 à 5, la valeur de tolérance entre le rapport actuel et la valeur de référence étant spécifiée comme une différence de lieu, de temps ou de vitesse de rotation correspondant à un glissement prédéterminé.

7. Procédé selon l'une des revendications 1 à 5, la ou les courroies d'entraînement (2, 3) étant réalisées sous la forme de courroies crantées et la valeur de tolérance spécifiée entre le rapport actuel et la valeur de référence étant au moins une différence de lieu, de temps ou de vitesse de rotation correspondant à un saut de dent.

8. Procédé selon l'une des revendications 1 à 7, la rotation du rotor ou la position du rotor étant déterminée par le biais du bus CAN du moteur et délivrée en tant que signal S_{M} puis traitée dans l'unité de calcul en vue de calculer les corrélations.

9. Procédé selon l'une des revendications 1 à 8, la détection des repères de courroie par les éléments de détection associés étant effectuée par le biais de procédés optiques, inductifs, capacitifs ou magnétiques.

10. Procédé selon l'une des revendications 1 à 9, la valeur de tolérance étant déterminée par l'utilisation d'un programme de calcul dans l'unité de calcul, le programme de calcul s'appuyant sur un procédé d'intelligence artificielle.

11. Utilisation du procédé selon les revendications 1 à 10 pour la surveillance d'un mécanisme de direction comprenant deux courroies d'entraînement sans fin transmettant la force, réalisées sous la forme de courroies de traction, de préférence des courroies d'entraînement réalisées sous la forme de courroies crantées.

12. Entraînement par courroie (1) comprenant au moins une poulie d'entraînement (6, 7) entraînée par un moteur d'entraînement (4) électrique, une poulie de sortie (8, 9) et au moins une courroie d'entraînement (2, 3) sans fin de transmission de force, réalisée sous forme d'une courroie de traction, qui s'enroule autour de la poulie d'entraînement et de la poulie de sortie respectivement sur une circonférence partielle, la courroie possédant exactement un premier repère (11, 12) et exactement un premier élément de détection (13, 14) associé à la courroie étant présent pour la détection du premier repère, le premier élément de détection possédant des dispositifs électroniques destinés à délivrer un signal S_{R} dépendant de la détection du premier repère, **caractérisé en ce que** le
rotor du moteur d'entraînement (4) possède exactement un deuxième repère et qu'exactement un deuxième élément de détection pourvu de dispositifs électroniques correspondants et associé au moteur d'entraînement est présent, le passage du deuxième repère pouvant être détecté par le deuxième élément de détection pendant la rotation du rotor et un
signal S_{M} dépendant de la position ou de la vitesse de rotation pouvant être délivré, **en ce qu'**une unité de calcul (16) pourvue de mémoires et de processeurs est en outre présente pour le traitement des signaux S_{R} et S_{M}, une corrélation temporelle ou locale de la survenance des signaux S_{R} et S_{M} à l'état neuf de la courroie d'entraînement pouvant être calculée dans l'unité de calcul et pouvant être mémorisée en tant que valeur de référence et pouvant être comparée à des corrélations correspondantes pour des tours de courroie ou des périodes supplémentaires spécifiés, un signal d'avertissement ou d'alarme pouvant être généré par le dispositif de calcul après dépassement d'une valeur de tolérance spécifiée entre la corrélation actuelle et la valeur de référence.

13. Entraînement par courroie selon la revendication 12, le premier repère (11, 12) étant réalisé sous la forme d'une bande étroite pourvue de particules ferromagnétiques ou électriquement conductrices sur la courroie, de préférence sur le dos de la courroie.

14. Entraînement par courroie selon la revendication 13, les particules ferromagnétiques ou électriquement conductrices étant présentes sous la forme d'un additif de mélange dans le matériau de base de la courroie.

15. Entraînement par courroie selon la revendication 13, les particules ferromagnétiques ou électriquement conductrices étant appliquées sous la forme d'une impression en caoutchouc ou en tissu.

16. Entraînement par courroie selon l'une des revendications 12 à 14 dans un mécanisme de direction d'un véhicule automobile, l'entraînement par courroie possédant deux courroies de traction d'entraînement (2, 3), réalisées de préférence sous forme de courroies crantées, ainsi que deux poulies d'entraînement et de sortie, les poulies d'entraînement (6, 7) et les poulies de sortie (8, 9) étant reliées entre elles de manière solidaire en rotation en tournant respectivement sur un arbre commun (5, 10), les deux courroies de traction d'entraînement (2, 3) possédant chacune exactement un premier repère (11, 12) et exactement un premier élément de détection (13, 14) associé destiné à la détection des repères de la courroie étant respectivement présent, les éléments de détection possédant des dispositifs électroniques destinés à délivrer des signaux S_{R1} et S_{R2} dépendant de la détection des repères, une unité de calcul (16) pourvue de mémoires et de processeurs étant en outre présente pour le traitement des signaux S_{R1}, S_{R2} et S_{M} selon la revendication 4 ou 5.
